# EUROPEAN PATENT APPLICATION

(11) **EP 4 808 221 A1**
(43) Date of publication of application: **16.09.2026**
(21) Application number: 24899936.9
(22) Date of filing: 06.12.2024
(51) Int. Cl.: H04W 52/02, H04W 74/04

(54) **METHODS FOR TRANSMITTING SSB ON SECONDARY CELL, AND APPARATUS**

(30) Priority: 06.12.2023 CN 202311670752
(71) Applicant: Huawei Technologies Co., Ltd., Shenzhen, Guangdong 518129 (CN)
(72) Inventor: LI, Jun, Shenzhen, Guangdong 518129 (CN); JIAO, Shurong, Shenzhen, Guangdong 518129 (CN); HUA, Meng, Shenzhen, Guangdong 518129 (CN)
(74) Representative: Huawei European IPR
(86) International application number: PCT/CN2024/137266
(87) International publication number: WO 2025/119302

(57) **Abstract**

This application relates to a method for transmitting an SSB in a secondary cell and an apparatus. In the method, a terminal may learn, based on configuration information, M secondary cells configured with SSB resources, and learn, based on indication information, that a first SSB is received in a first secondary cell of the M secondary cells. In this way, the terminal does not need to obtain the first SSB of the first secondary cell through blind detection, thereby reducing power consumption of detecting an SSB by the terminal.

## Description

This application claims priority to Chinese Patent Application No. 202311670752.4, filed with the China National Intellectual Property Administration on December 6, 2023 and entitled "METHOD FOR TRANSMITTING SSB IN SECONDARY CELL AND APPARATUS ", which is incorporated herein by reference in its entirety.

### TECHNICAL FIELD

This application relates to the field of communication technologies, and in particular, to a method for transmitting an SSB in a secondary cell and an apparatus.

### BACKGROUND

Currently, a terminal may perform communication in a plurality of cells at the same time, to support high-speed data transmission. The plurality of cells may include a primary cell (primary cell, PCell) and at least one secondary cell (secondary cell, SCell). In this way, carrier aggregation (carrier aggregation, CA) can be implemented in the plurality of cells.

Generally, the terminal may obtain a synchronization signal and physical broadcast channel block (synchronization signal and physical broadcast channel block, SSB) of a cell through blind detection, to perform synchronization. However, in a CA scenario, when the terminal obtains an SSB of the SCell through blind detection, complexity is high. This increases power consumption of detecting the SSB by the terminal. Therefore, how to reduce power consumption of detecting the SSB by the terminal becomes a technical problem that urgently needs to be resolved in a current stage.

### SUMMARY

This application provides a method for transmitting an SSB in a secondary cell and an apparatus, to reduce power consumption of detecting the SSB by a terminal.

According to a first aspect, a method for transmitting an SSB in a secondary cell is provided. The method may be performed by a terminal, may be performed by a module (for example, a processor, a chip, or a chip system) used in the terminal, or may be implemented by a logical node, a logical module, or software that can implement all or some functions of the terminal. In the method, configuration information may be received from a network device, where the configuration information indicates SSB resources in M secondary cells, and M is a positive integer. Alternatively, indication information may be received from the network device, where the indication information indicates to receive a first SSB in the first secondary cell, and the first secondary cell is one of the M secondary cells. In this way, the first SSB from the network device may be received on an SSB resource in the first secondary cell.

It can be learned that, in the foregoing embodiment, the terminal may learn, based on the configuration information, the M secondary cells configured with SSB resources, and learn, based on the indication information, that the first SSB is received in the first secondary cell in the M secondary cells. In this way, the terminal does not need to obtain the first SSB of the first secondary cell through blind detection, thereby reducing power consumption of detecting an SSB by the terminal.

With reference to the first aspect, optionally, the indication information includes a cell index of the first secondary cell.

With reference to the first aspect, optionally, the indication information is a bitmap, and one bit in the bitmap corresponds to the first secondary cell.

With reference to the first aspect, optionally, the method further includes: sending a signal to the network device, where the signal is used to request the network device to send an SSB in N secondary cells, the N secondary cells include the first secondary cell, and N is a positive integer.

It can be learned that, in the foregoing embodiment, the terminal may request, by using the signal, the network device to send the SSB in the N secondary cells. In other words, when the terminal has a data transmission requirement, the terminal may actively send the signal to the network device, so that the terminal can receive the SSB of the secondary cell and perform synchronization. In this way, a data transmission requirement of the terminal can be ensured.

With reference to the first aspect, optionally, the method further includes: the indication information further indicates to receive a second SSB in a second secondary cell, where the second secondary cell is one of the M secondary cells, and the second secondary cell is different from the first secondary cell; and receiving, on an SSB resource in the second secondary cell, the second SSB from the network device.

It can be learned that, in the foregoing embodiment, the terminal may further learn, based on the indication information, that the second SSB is received in the second secondary cell, so that the terminal performs synchronization with the second secondary cell. In this way, the terminal may flexibly perform data transmission based on the data transmission requirement of the terminal.

According to a second aspect, a method for transmitting an SSB in a secondary cell is provided. The method may be performed by a network device, may be performed by a module (for example, a processor, a chip, or a chip system) used in the network device, or may be implemented by a logical node, a logical module, or software that can implement all or some functions of the network device. In the method, configuration information may be sent to the terminal, where the configuration information indicates synchronization signal block SSB resources in M secondary cells, and M is a positive integer. Alternatively, indication information may be sent to the terminal, where the indication information indicates to receive a first SSB in a first secondary cell, and the first secondary cell is one of the M secondary cells. In this way, the first SSB may be sent to the terminal on the SSB resource in the first secondary cell.

It can be learned that, in the foregoing embodiment, the network device may indicate, to the terminal based on the configuration information, the M secondary cells configured with SSB resources, and send the indication information, so that the terminal learns that the first SSB is received in the first secondary cell in the M secondary cells. In this way, the terminal does not need to obtain the first SSB of the first secondary cell through blind detection, thereby reducing power consumption of detecting an SSB by the terminal.

With reference to the second aspect, optionally, the indication information includes a cell index of the first secondary cell.

With reference to the second aspect, optionally, the indication information is a bitmap, and one bit in the bitmap corresponds to the first secondary cell.

With reference to the second aspect, optionally, the method further includes: receiving a signal from the terminal, where the signal is used to request the network device to send an SSB in N secondary cells, the N secondary cells include the first secondary cell, and N is a positive integer.

With reference to the second aspect, optionally, the method further includes: the indication information further indicates to receive a second SSB in a second secondary cell, where the second secondary cell is one of the M secondary cells, and the second secondary cell is different from the first secondary cell; and sending the second SSB to the terminal on an SSB resource in the second secondary cell.

It can be learned that, in the foregoing embodiment, the network device may further indicate to receive the second SSB in the second secondary cell, so that the terminal receives the second SSB in the second secondary cell and performs synchronization with the second secondary cell. In this way, the terminal may flexibly select a corresponding secondary cell based on the data transmission requirement of the terminal to perform data transmission.

According to a third aspect, a method for transmitting an SSB in a secondary cell is provided. The method may be performed by a terminal, may be performed by a module (for example, a processor, a chip, or a chip system) used in the terminal, or may be implemented by a logical node, a logical module, or software that can implement all or some functions of the terminal. In the method, a first signal may be sent to the network device, where the first signal is used to request the network device to send a first SSB in a first secondary cell. Therefore, the first SSB from the network device may be received in the first secondary cell.

It can be learned that, in the foregoing embodiment, the terminal may request, by using the first signal, the network device to send the first SSB in the first secondary cell, so that the terminal can receive the first SSB in the first secondary cell requested by the terminal. In this way, the terminal does not need to obtain the first SSB of the first secondary cell through blind detection, thereby reducing power consumption of detecting an SSB by the terminal.

With reference to the third aspect, optionally, the first secondary cell is a secondary cell with a minimum cell index in N secondary cells, the N secondary cells include a secondary cell that is configured with an SSB resource and that does not receive an SSB, and N is a positive integer; and/or a frequency band index of a frequency band in which the first secondary cell is located is a minimum frequency band index in frequency bands in which the N secondary cells are located.

With reference to the third aspect, optionally, the method further includes: the first signal is further used to request the network device to send a second SSB in a second secondary cell, where the second secondary cell is one of the N secondary cells, and the second secondary cell is different from the first secondary cell; and receiving, in the second secondary cell, the second SSB from the network device.

It can be learned that, in the foregoing embodiment, the first signal is further used to request the network device to send the second SSB in the second secondary cell. In this way, the terminal may further receive the second SSB in the second secondary cell, and synchronize with the second secondary cell. In this way, the terminal may flexibly select a corresponding secondary cell based on the data transmission requirement of the terminal to perform data transmission.

According to a fourth aspect, a method for transmitting an SSB in a secondary cell is provided. The method may be performed by a network device, may be performed by a module (for example, a processor, a chip, or a chip system) used in the network device, or may be implemented by a logical node, a logical module, or software that can implement all or some functions of the network device. In the method, a first signal from a terminal may be received, where the first signal is used to request the network device to send a first SSB in a first secondary cell. In this way, the first SSB may be sent to the terminal in the first secondary cell.

It can be learned that, in the foregoing embodiment, the network device may receive the first signal, to send the first SSB in the first secondary cell requested by the terminal. In this way, the terminal does not need to obtain the first SSB of the first secondary cell through blind detection, thereby reducing power consumption of detecting an SSB by the terminal.

With reference to the fourth aspect, optionally, the first secondary cell is a secondary cell with a minimum cell index in N secondary cells, the N secondary cells include a secondary cell that is configured with an SSB resource and that does not receive an SSB, and N is a positive integer; and/or a frequency band index of a frequency band in which the first secondary cell is located is a minimum frequency band index in frequency bands in which the N secondary cells are located.

With reference to the fourth aspect, optionally, the method further includes: the first signal is further used to request the network device to send a second SSB in a second secondary cell, where the second secondary cell is one of the N secondary cells, and the second secondary cell is different from the first secondary cell; and sending the second SSB to the terminal in the second secondary cell.

It can be learned that, in the foregoing embodiment, the first signal is further used to request the network device to send the second SSB in the second secondary cell. In this way, the terminal may further receive the second SSB in the second secondary cell, and synchronize with the second secondary cell. In this way, the terminal may flexibly select a corresponding secondary cell based on the data transmission requirement of the terminal to perform data transmission.

According to a fifth aspect, a communication apparatus is provided, including a unit or module configured to implement the method according to any one of the implementations of any one of the first aspect to the fourth aspect. The communication apparatus may be a terminal or a network device, may be a module (for example, a processor, a chip, or a chip system) of a terminal or a network device, or may be a logical node, a logical module, or software that can implement all or some functions of a terminal or a network device.

According to a sixth aspect, a communication apparatus is provided. The communication apparatus includes at least one processor. The at least one processor is configured to perform the method according to any one of the implementations of any one of the first aspect to the fourth aspect. The communication apparatus may be a terminal or a network device, may be a module (for example, a processor, a chip, or a chip system) of a terminal or a network device, or may be a logical node, a logical module, or software that can implement all or some functions of a terminal or a network device. The at least one processor may execute a computer program or instructions in a storage, so that the foregoing method is performed. The storage may be included in the communication apparatus, or may be located outside the communication apparatus. In addition, the communication apparatus may further include an interface.

According to a seventh aspect, a communication system is provided. The communication system includes a terminal and a network device. The terminal is configured to perform the method according to any one of the first aspect. The network device is configured to perform the method according to any one of the second aspect.

According to an eighth aspect, a communication system is provided. The communication system includes a terminal and a network device. The terminal is configured to perform the method according to any one of the third aspect. The network device is configured to perform the method according to any one of the fourth aspect.

According to a ninth aspect, a computer-readable storage medium is provided. The computer-readable storage medium stores computer instructions. When the computer instructions are executed, a computer is enabled to perform the method according to any one of the implementations of any one of the first aspect to the fourth aspect.

According to a tenth aspect, a computer program product is provided. The computer program product includes computer program code. When the computer program code is run on a computer, the computer is enabled to perform the method according to any one of the implementations of any one of the first aspect to the fourth aspect.

### BRIEF DESCRIPTION OF DRAWINGS

FIG. 1 is a diagram of an architecture of a communication system according to an embodiment of this application;
FIG. 2A to FIG. 2C are diagrams of carrier aggregation;
FIG. 3 is a schematic flowchart of a method for transmitting an SSB in a secondary cell according to an embodiment of this application;
FIG. 4 is a schematic flowchart of another method for transmitting an SSB in a secondary cell according to an embodiment of this application;
FIG. 5 is a diagram of a structure of a communication apparatus according to an embodiment of this application; and
FIG. 6 is a diagram of a structure of another communication apparatus according to an embodiment of this application.

### DESCRIPTION OF EMBODIMENTS

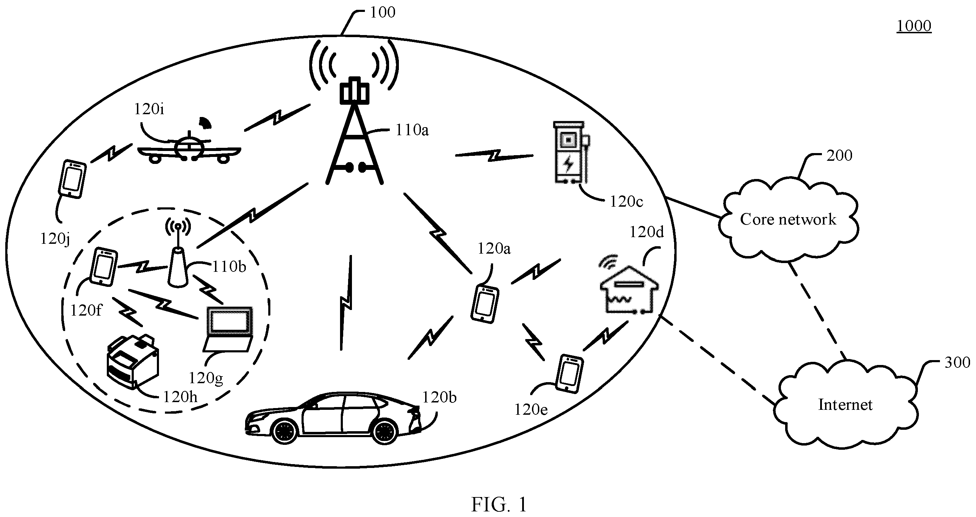

FIG. 1 is a diagram of an architecture of a communication system 1000 according to an embodiment of this application. As shown in FIG. 1, the communication system 1000 includes a radio access network (radio access network, RAN) 100 and a core network 200. Optionally, the communication system 1000 may further include an Internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP), or may be a Wi-Fi system. The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help the terminal access a communication system in a wireless manner.

In an application scenario, the RAN node may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), a radio unit (radio unit, RU), or the like. The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete some or a part of functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server to which a corresponding software module is loaded. A specific technology and a specific device form that are used by the RAN node are not limited in embodiments of this application. For ease of description, the following uses a base station as an example of the RAN node for description. In this application, the base station and the network device may be used interchangeably.

The terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, each of 110a and 110b in FIG. 1 may be referred to as a communication apparatus having a function of a base station, and each of 120a to 120j in FIG. 1 may be referred to as a communication apparatus having a function of a terminal.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus including the function of the terminal.

To facilitate understanding of content of the solutions, the following further explains and describes some terms in embodiments of this application, to facilitate understanding by a person skilled in the art. This part is merely for ease of understanding, and cannot be considered as a specific limitation on this application.

### 1. Reference signal

A reference signal may be used for time-frequency synchronization, and the like. In other words, a terminal may obtain downlink timing based on the reference signal. The downlink timing may be understood as a boundary of at least one of a system frame, a half-frame, a slot, a subframe, a symbol, or the like.

The reference signal may be an SSB, or may be a tracking reference signal (tracking reference signal, TRS), a positioning reference signal (positioning reference signal, PRS), or the like. This is not limited in this application. The following uses an example in which the reference signal is the SSB for description.

Generally, the network device may configure an SSB resource, for example, may include one or more of a time domain resource, a frequency domain resource, a code domain resource, a space domain resource, and a power domain resource.

The time domain resource includes at least one of an SSB period, a slot-level offset in a period, a symbol index in a slot, a time domain location of an SSB in a half-frame, and the like. A time domain position of the SSB in the half-frame is configured by using a bitmap (or referred to as an SSB burst position (ssb-PositionsInBurst)). The bitmap may be 4 bits, 8 bits, or 64 bits. In the bitmap, a first bit (that is, a leftmost bit) corresponds to an SSB index (index) 0, a second bit corresponds to an SSB index 1, and so on. When a bit in the bitmap is set to 0, it indicates that a corresponding SSB is not transmitted, that is, the SSB is not sent. When the bit is set to 1, it indicates that a corresponding SSB is transmitted, that is, the SSB is sent, and vice versa.

The frequency domain resource includes at least one of a frequency location of the SSB, a subcarrier spacing of the SSB, a bandwidth, a start resource block (resource block, RB), a frequency hopping configuration, a frequency domain comb configuration, and the like.

The code domain resource includes at least one of a sequence of the SSB, a cyclic shift of the SSB, and the like.

The power domain resource includes at least one of power of the SSB, a power range, a power offset, a power threshold, and the like. The power of the SSB may be understood as transmit power of the SSB, and may be more specifically understood as transmit power of a secondary synchronization signal (secondary synchronization signal, SSS) in the SSB, or the like. The power range may include an interval determined by a maximum power value and a minimum power value. The power range may further include a boundary point or may not include a boundary point, for example, a maximum power value and/or a minimum power value.

### 2. Signal

A signal (for example, a first signal below) mentioned in this application may be used to request a network device to send an SSB in at least one secondary cell (for example, at least one of a first secondary cell and a second secondary cell below). The signal may be understood as a channel or a wake-up signal (wake-up signal, WUS).

A channel mentioned in this application may be a physical random access channel (physical random access channel, PRACH), a physical uplink control channel (physical uplink control channel, PUCCH), or a physical uplink shared channel (physical uplink shared channel, PUSCH).

The PRACH may be classified into a non-contention-based PRACH and a contention-based PRACH.

It should be noted that, in this application, the PUCCH and the PUSCH are merely used as examples of an uplink control channel and an uplink data channel, respectively. In different systems and different scenarios, the data channel and the control channel may have different names. This is not limited in embodiments of this application.

Optionally, that the signal may have an association relationship with at least one secondary cell may be specifically understood as that the signal has an association relationship with an SSB (the SSB is an SSB corresponding to a bit value 1 in ssb-PositionsInBurst) in each of the at least one secondary cell. In other words, after receiving the signal, the network device may learn, based on the association relationship, that the SSB is sent in the at least one secondary cell. Alternatively, after the terminal sends the signal, it indicates that the terminal requests to send the SSB in the at least one secondary cell. The association relationship may be predefined or preconfigured, or the association relationship may be indicated by the network device to the terminal, that is, the network device indicates secondary cells associated with the signal, or may be understood as indicating SSBs in which secondary cells are associated with the signal.

Optionally, quantities of secondary cells associated with different signals may be the same or different. For example, a quantity of secondary cells associated with a signal 1 is 2, and a quantity of secondary cells associated with a signal 2 is 3.

Optionally, the secondary cells associated with the different signals may be partially the same or completely different. For example, the signal 1 is associated with a secondary cell 1, and the signal 2 is associated with the secondary cell 1 and a secondary cell 2. In other words, the secondary cells associated with the signal 1 and the signal 2 are partially the same. For another example, the signal 1 is associated with the secondary cell 1, and the signal 2 is associated with the secondary cell 2 and a secondary cell 3. In other words, the secondary cells associated with the signal 1 and the signal 2 are completely different.

Optionally, when the signal is the PUCCH or the PUSCH, that there is an association relationship between the signal and the at least one secondary cell may be understood as: There is an association relationship between uplink control information (uplink control information, UCI) carried in the PUCCH or the PUSCH and the at least one secondary cell. Alternatively, there is an association relationship between a buffer status report (buffer status report, BSR) carried in the PUSCH and the at least one secondary cell. That the signal is associated with the at least one secondary cell may be understood as that the signal is associated with an SSB in each of the at least one secondary cell.

### 3. Carrier (component carrier, CC)

A CC is a segment of continuous frequency range that complies with system specifications. This frequency range can be determined by the center frequency (denoted as carrier frequency) of the carrier and the bandwidth of the carrier.

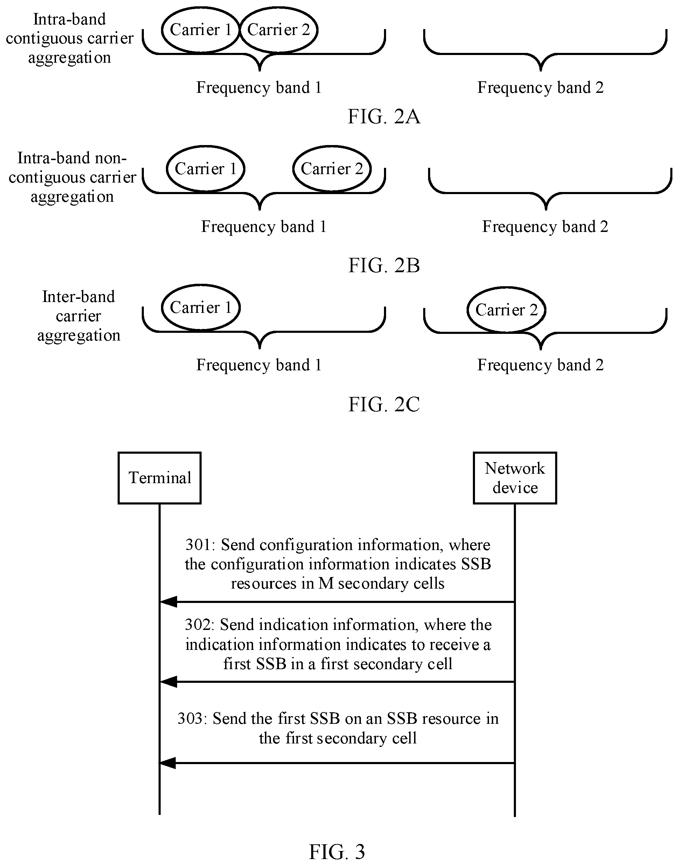

To improve a data transmission rate and reduce a delay, a CA technology is proposed. CA aggregates a plurality of contiguous or non-contiguous carriers to provide a larger bandwidth. Generally, based on the frequency bands where the aggregated carriers are located, CA may be further classified into intra-band carrier aggregation (intra-band CA) and inter-band carrier aggregation (inter-band CA). The intra-band CA may be classified into intra-band contiguous carrier aggregation and intra-band non-contiguous carrier aggregation. As shown in FIG. 2A, aggregation of a contiguous carrier 1 and a contiguous carrier 2 in a frequency band 1 may be referred to as intra-band contiguous carrier aggregation. As shown in FIG. 2B, aggregation of a non-contiguous carrier 1 and a non-contiguous carrier 2 in a frequency band 1 may be referred to as intra-band non-contiguous carrier aggregation. As shown in FIG. 2C, aggregation of a carrier 1 in a frequency band 1 and a carrier 2 in a frequency band 2 may be referred to as inter-band CA.

In the CA technology, a terminal may perform communication in a plurality of cells at the same time, to support high-speed data transmission. The plurality of cells may include a primary cell and at least one secondary cell.

The primary cell is a cell in which the terminal and the network device perform initial connection establishment (connection establishment), a cell in which the terminal performs radio resource control (radio resource control, RRC) connection reestablishment, or a primary cell executed in a handover (handover) process. The primary cell is responsible for radio resource control RRC communication with the terminal, and a CC in the primary cell is referred to as a primary component carrier (primary component carrier, PCC).

Compared with the primary cell, the secondary cell may provide additional radio resources. Optionally, the plurality of secondary cells may be deployed in a co-site manner or a non-co-site manner. Co-site deployment may be understood as that two carriers are deployed at a same site, for example, a same network device, and the two carriers are carriers deployed in the co-site manner. The two carriers may respectively belong to different secondary cells. Non-co-site deployment may be understood as deployment at different sites. For example, a carrier of one network device belongs to one secondary cell, and a carrier of another network device belongs to another secondary cell. The two network devices are located at different sites.

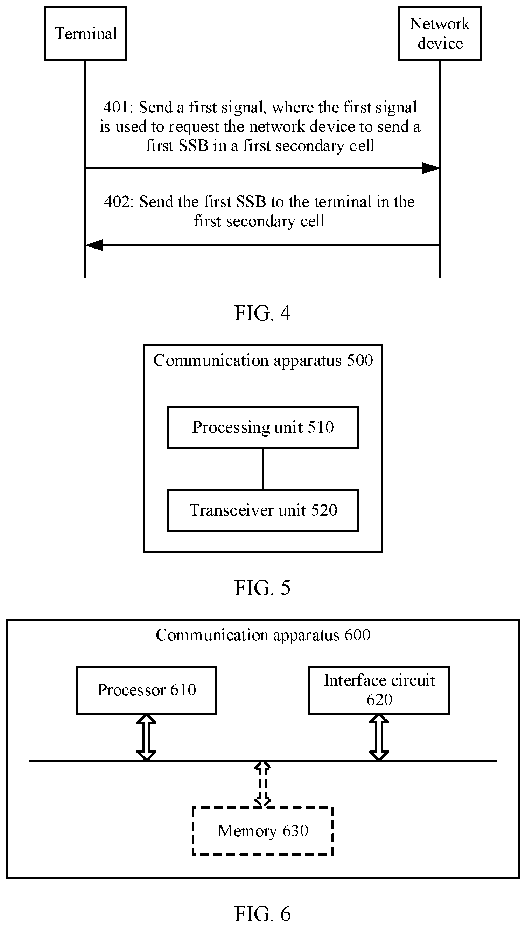

Generally, in an intra-band CA scenario, downlink timing of the secondary cell may be the same as downlink timing of the primary cell. In other words, the network device may not send the SSB in the secondary cell. In an inter-band CA scenario, downlink timing of CCs in different frequency bands may be different. Therefore, the network device may send the SSB in the secondary cell, so that the terminal can obtain the SSB in the secondary cell through blind detection and perform synchronization. In addition, the network device may further send an SSB in a non-co-sited secondary cell, so that the terminal can obtain the SSB in the non-co-sited secondary cell through blind detection and perform synchronization. It can be learned that, in these cases, the terminal needs to obtain the SSB in the secondary cell through blind detection. This increases power consumption of detecting the SSB by the terminal. Therefore, how to reduce power consumption of detecting the SSB by the terminal becomes a technical problem that urgently needs to be resolved in a current stage. Based on this, this application provides the embodiment shown in FIG. 3 or FIG. 4, to resolve this problem.

The following describes embodiments of this application in detail. Specifically, the terminal in the following may be the terminal in FIG. 1, and the network device in the following may be the network device in FIG. 1. It should be noted that names of messages between network elements, names of parameters in the messages, and the like in the following embodiments are merely examples, and there may be other names during specific implementation. This is not specifically limited in embodiments of this application. Processing performed by a single execution body (the terminal or the network device) shown in embodiments of this application may also be divided into processing performed by a plurality of execution bodies, and these execution bodies may be logically and/or physically separated. For example, processing performed by the network device may be performed by at least one of a CU, a DU, and an RU.

FIG. 3 shows a method for transmitting an SSB in a secondary cell according to an embodiment of this application. The method includes but is not limited to the following steps.

301: A network device sends configuration information to a terminal, where the configuration information indicates SSB resources in M secondary cells, and M is a positive integer.

Correspondingly, the terminal receives the configuration information from the network device.

Optionally, that the configuration information indicates the SSB resources in the M secondary cells may be understood as that the configuration information indicates an SSB resource of each of the M secondary cells. For the SSB resource herein, refer to the foregoing related descriptions. Details are not described herein again.

In a possible implementation, the configuration information may be carried in an RRC message or a medium access control layer control element (medium access control-control element, MAC CE).

302: The network device sends indication information to the terminal, where the indication information indicates to receive a first SSB in a first secondary cell, and the first secondary cell is one of the M secondary cells.

Correspondingly, the terminal receives the indication information from the network device.

It should be understood that the first SSB may include an SSB corresponding to a bit whose value is 1 in ssb-PositionsInBurst in the first secondary cell.

That the indication information indicates to receive the first SSB in the first secondary cell may be understood as one of the following. Details are as follows.
1. The indication information includes a cell index of the first secondary cell.

It should be noted that a cell index of a secondary cell mentioned in this application may be used to identify the secondary cell. Optionally, the cell index of the secondary cell may be a physical cell identifier (physical cell identifier, PCI), a cell global identifier (cell global identity, CGI), or the like. The cell index of the secondary cell may alternatively have another name, for example, a cell identifier of the secondary cell or a cell number of the secondary cell. This is not limited in this application.

2. The indication information is a bitmap, and one bit in the bitmap corresponds to the first secondary cell. For example, in the bitmap, a first bit (that is, a leftmost bit, or a most significant bit (most significant bit, MSB)) corresponds to a secondary cell 1, a second bit corresponds to a secondary cell 2, and the rest may be deduced by analogy. In other words, different bits in the bitmap correspond to different secondary cells. For example, cell indexes of the secondary cells are in a one-to-one correspondence with the bits in the bitmap according to ascending order of the cell indexes of the secondary cells. Alternatively, indexes of the secondary cells are in a one-to-one correspondence with the bits in the bitmap according to descending order of the indexes of the secondary cells.

When a bit in the bitmap is set to 0, it indicates that a corresponding SSB is not transmitted in a secondary cell corresponding to the bit. In other words, the network device does not send the SSB in the secondary cell, and the terminal does not receive the SSB in the secondary cell. When the bit is set to 1, it indicates that the corresponding SSB is transmitted in the secondary cell corresponding to the bit. In other words, the network device sends the SSB in the secondary cell, the terminal receives the SSB in the secondary cell, and vice versa.

3. The indication information may be P bits, the P bits correspond to 2^{P} states, and one of the states indicates that the first SSB is received in the first secondary cell. P is a positive integer.

Optionally, different states corresponding to the P bits may represent different content. Details are as follows.

For example, M is 1, and it is assumed that an SSB resource is configured for the first secondary cell. When P is 1, there are two corresponding states: '1' and '0'. '1' may indicate that the first SSB is transmitted, that is, the network device sends the first SSB in the first secondary cell, and the terminal receives the first SSB in the first secondary cell; '0' may indicate that the first SSB is not transmitted, that is, the network device does not send the first SSB in the first secondary cell, and the terminal does not receive the first SSB in the first secondary cell; and vice versa.

For another example, M is 3, and it is assumed that SSB resources are configured for a secondary cell 0 to a secondary cell 2. When P is 2, there are four corresponding states: '00', '01', '10', and '11'. '00' may indicate that no SSB is transmitted, that is, the network device does not send corresponding SSBs in three secondary cells, and the terminal does not receive the corresponding SSBs in the three secondary cells; and '01' may indicate that the network device sends a corresponding SSB in the secondary cell 0, and the terminal receives the corresponding SSB in the secondary cell 0. '10' may indicate that the network device sends a corresponding SSB in the secondary cell 1, and the terminal receives the corresponding SSB in the secondary cell 1. '11' may indicate that the network device sends a corresponding SSB in the secondary cell 2, and the terminal receives the corresponding SSB in the secondary cell 2.

It should be noted that the foregoing is merely some examples, and specific content represented by different states corresponding to the P bits is not limited in this application.

Optionally, the indication information may further indicate to receive a second SSB in a second secondary cell. In this way, the terminal may further receive the second SSB from the network device on an SSB resource in the second secondary cell. The second secondary cell is one of the M secondary cells, and the second secondary cell is different from the first secondary cell. In other words, when M is greater than 1, the network device may indicate the terminal to separately receive SSBs in a plurality of secondary cells in the M secondary cells. A quantity of secondary cells indicated by the network device is not limited in this application.

It should be understood that the second SSB may include an SSB corresponding to a bit whose value is 1 in ssb-PositionsInBurst in the second secondary cell.

Optionally, the network device may indicate, by using one or more pieces of indication information, the terminal to separately receive SSBs in at least one of the M secondary cells. For example, one piece of indication information indicates the terminal to separately receive SSBs in a part of the M secondary cells, and another piece of indication information indicates the terminal to separately receive SSBs in the other part of the M secondary cells. A quantity of secondary cells indicated by each piece of indication information may be one or more. This is not limited herein.

It should be noted that, when there are a plurality of pieces of indication information, the network device may send the plurality of pieces of indication information at a time, or may send the plurality of pieces of indication information separately for a plurality of times. A specific implementation is not limited herein.

That the indication information further indicates to receive the second SSB in the second secondary cell may be understood as follows.
(1) For the foregoing manner 1, the indication information may further include a cell index of the second secondary cell.
(2) For the foregoing manner 2, another bit in the bitmap (the indication information is the bitmap) corresponds to the second secondary cell.
(3) For the foregoing manner 3, another state corresponding to the P bits indicates that the second SSB is received in the second secondary cell. For example, when P is 1, there are two corresponding states: '1' and '0'. '1' may indicate that the first SSB is transmitted, that is, the network device sends the first SSB in the first secondary cell, and the terminal receives the first SSB in the first secondary cell; '0' may indicate that the second SSB is transmitted, that is, the network device sends the second SSB in the second secondary cell, and the terminal receives the second SSB in the second secondary cell; and vice versa.

Optionally, the indication information may be carried, for example, in a MAC CE, a message 2 (Msg2), or downlink control information (downlink control information, DCI). The Msg2 may be referred to as a random access response (random access response, RAR).

In a possible implementation, the network device may further receive a signal from the terminal, where the signal is used to request the network device to send SSBs in N secondary cells, the N secondary cells include the first secondary cell, and N is a positive integer. In other words, before step 302, the network device may receive the signal from the terminal, to trigger the network device to send the indication information to the terminal. For the signal herein, refer to the foregoing related descriptions. In other words, the signal may be understood as a channel, a WUS, or the like. Details are not described herein again.

Optionally, when the signal is a PRACH and the PRACH is a non-contention-based PRACH, the indication information may be carried in, for example, a Msg2.

Optionally, the N secondary cells are one or more of the M secondary cells. In other words, N is an integer greater than or equal to 1 and less than or equal to M.

Optionally, the N secondary cells may further include the second secondary cell.

303: The network device sends the first SSB to the terminal on an SSB resource in the first secondary cell.

Correspondingly, the terminal receives the first SSB from the network device on the SSB resource in the first secondary cell.

It can be learned that, in the foregoing embodiment, the terminal may learn, based on the configuration information, the M secondary cells configured with SSB resources, and learn, based on the indication information, that the first SSB is received in the first secondary cell in the M secondary cells. In this way, the terminal does not need to obtain the first SSB of the first secondary cell through blind detection, thereby reducing power consumption of detecting the SSB by the terminal, and also helping the network device save energy.

FIG. 4 shows another method for transmitting an SSB in a secondary cell according to an embodiment of this application. The method includes but is not limited to the following steps.

401: A terminal sends a first signal to a network device, where the first signal is used to request the network device to send a first SSB in a first secondary cell.

Correspondingly, the network device receives the first signal from the terminal. For descriptions of the first signal, refer to the foregoing related descriptions. In other words, the first signal may be understood as a channel, a WUS, or the like. Details are not described herein again. For the first SSB, refer to the related descriptions of step 302 in FIG. 3.

The first secondary cell may be understood as a predefined or preconfigured cell, or a cell indicated by the network device. Details are as follows.

1. The first secondary cell is a secondary cell with a minimum or maximum cell index in N secondary cells, where N is a positive integer.

The N secondary cells include a secondary cell in which an SSB is not received (by the terminal) in secondary cells configured with SSB resources. This may also be understood as at least one of the following: The N secondary cells include a secondary cell in which uplink transmission and/or downlink transmission cannot be performed (by the terminal) in the secondary cells configured with the SSB resources; the N secondary cells include a secondary cell in which synchronization is not performed (by the terminal) in the secondary cells configured with the SSB resources; and the N secondary cells include a secondary cell whose downlink timing of the secondary cell is not obtained (by the terminal) in the secondary cells configured with the SSB resources.

That an SSB is not received does not mean that the SSB is always not received. This is because the terminal may receive the SSB after step 402. For example, if an SSB is not sent in a secondary cell in a period of time, the terminal does not receive the SSB in the period of time. In this case, the first information may be associated with the secondary cell. After step 402, if the terminal receives the SSB in the secondary cell, the first signal does not need to be associated with the secondary cell. However, after the base station indicates that an SSB is not sent in the secondary cell, the first signal may be associated with the secondary cell again. In other words, that the SSB is not received may be understood as that the SSB is not received within a period of time. The period of time may be understood as a period of time from a time point at which the network device indicates not to send an SSB in the secondary cell to a time point at which the network device indicates to send an SSB in the secondary cell. For example, if the network device indicates not to send an SSB in the secondary cell in a slot i, and the network device indicates to send an SSB in the secondary cell in a slot j, the period of time is from the slot i to the slot j, and may include the slot i and/or the slot j, or may not include the slot i and the slot j.

Optionally, the terminal may receive the configuration information from the network device, to learn of the secondary cell configured with the SSB resource. In other words, the configuration information may be used to indicate the SSB resources in the at least one secondary cell. In other words, the configuration information may be used to indicate an SSB resource of each of the at least one secondary cell. For the SSB resource herein, refer to the foregoing related descriptions. Details are not described herein again.

2. A frequency band index of the frequency band in which the first secondary cell is located is a minimum frequency band index or a maximum frequency band index in frequency bands in which the N secondary cells are located.

It should be noted that the foregoing manner 1 or manner 2 may be separately used as an implementation of the first secondary cell. Alternatively, the foregoing manner 1 and manner 2 may be combined and used as an implementation of the first secondary cell. For example, there are a plurality of secondary cells on a frequency band corresponding to a minimum frequency band index, and the first secondary cell is a secondary cell with a minimum or maximum cell index in the plurality of secondary cells. In other words, the first secondary cell is a secondary cell with a minimum or maximum cell index in a frequency band corresponding to a minimum frequency band of all secondary cells configured with SSB resources. The minimum frequency band refers to a minimum frequency band index. Alternatively, there are a plurality of secondary cells on a frequency band corresponding to a maximum frequency band index, and the first secondary cell is a secondary cell with a minimum or maximum cell index in the plurality of secondary cells. In other words, the first secondary cell is a secondary cell with a minimum or maximum cell index in a frequency band corresponding to a maximum frequency band of all secondary cells configured with SSB resources. The maximum frequency band refers to a maximum frequency band index.

In addition, the foregoing manner 1 or manner 2 is merely an example. The first secondary cell may be any one of the N secondary cells. This is not limited in this application.

That the first signal is used to request the network device to send the first SSB in the first secondary cell may be understood as: The first signal may have an association relationship with the first secondary cell, or the first signal may have an association relationship with the first SSB in the first secondary cell. In other words, after receiving the first signal, the network device may learn, based on the association relationship, that the first SSB is sent in the first secondary cell. Optionally, the association relationship may be predefined or preconfigured, or the association relationship may be indicated by the network device to the terminal.

Optionally, the first signal may be further used to request the network device to send the second SSB in the second secondary cell, where the second secondary cell is one of the N secondary cells, and the second secondary cell is different from the first secondary cell. In other words, the first signal may be further associated with the second secondary cell, or the first signal may be further associated with the second SSB in the second secondary cell. In other words, after receiving the first signal, the network device may further learn, based on the association relationship between the first signal and the second secondary cell, that the second SSB is sent in the second secondary cell. In this way, the terminal may further receive the second SSB from the network device in the second secondary cell. In other words, it may be understood that the first signal is associated with a secondary cell set, including the first secondary cell, the second secondary cell, and the like. A quantity of secondary cells included in the secondary cell set is not limited in this application.

The second secondary cell may be understood as a predefined or preconfigured cell, or a cell indicated by the network device. Details are as follows.
(1) The second secondary cell is a secondary cell with a minimum or maximum cell index in the N secondary cells.
(2) A frequency band index of a frequency band in which the second secondary cell is located is a minimum frequency band index or a maximum frequency band index in frequency bands in which the N secondary cells are located.

It should be noted that the foregoing manner (1) or manner (2) may be separately used as an implementation of the second secondary cell. Alternatively, the foregoing manner 1 and manner 2 may be combined and used as an implementation of the second secondary cell. For example, there are a plurality of secondary cells on a frequency band corresponding to a minimum frequency band index, and the second secondary cell is a secondary cell with a minimum or maximum cell index in the plurality of secondary cells. In other words, the second secondary cell is a secondary cell with a minimum or maximum cell index in a frequency band corresponding to a minimum frequency band of all secondary cells configured with SSB resources. The minimum frequency band refers to a minimum frequency band index. Alternatively, there are a plurality of secondary cells on a frequency band corresponding to a maximum frequency band index, and the second secondary cell is a secondary cell with a minimum or maximum cell index in the plurality of secondary cells. In other words, the second secondary cell is a secondary cell with a minimum or maximum cell index in a frequency band corresponding to a maximum frequency band of all secondary cells configured with SSB resources. The maximum frequency band refers to a maximum frequency band index.

In addition, the foregoing manner (1) or manner (2) is merely an example. The second secondary cell may be any cell that is different from the first secondary cell in the N secondary cells. This is not limited in this application.

402: The network device sends the first SSB to the terminal in the first secondary cell.

Correspondingly, the terminal receives the first SSB from the network device in the first secondary cell. For example, the terminal receives the first SSB from the network device on the SSB resource in the first secondary cell.

It can be learned that, in the foregoing embodiment, the terminal may request, by using the first signal, the network device to send the first SSB in the first secondary cell, so that the terminal can receive the first SSB in the first secondary cell requested by the terminal. In this way, the terminal does not need to obtain the first SSB of the first secondary cell through blind detection, thereby reducing power consumption of detecting the SSB by the terminal, and also helping the network device save energy.

It may be understood that, to implement the functions in the foregoing embodiments, the network device and the terminal include corresponding hardware structures and/or software modules for performing each function. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

FIG. 5 and FIG. 6 are diagrams of structures of possible communication apparatuses according to embodiments of this application. These communication apparatuses may be configured to implement functions of the terminal or the network device in the foregoing method embodiments. Therefore, beneficial effect of the foregoing method embodiments can also be implemented. In embodiments of this application, the communication apparatus may be the terminal 120 shown in FIG. 1, or may be the RAN node 110 (for example, a network device) shown in FIG. 1, or may be a module (for example, a chip) used in a terminal or a RAN node (for example, a network device).

As shown in FIG. 5, a communication apparatus 500 includes a processing unit 510 and a transceiver unit 520. The communication apparatus 500 is configured to implement functions of the terminal or the network device in the method embodiment shown in FIG. 3 or FIG. 4.

When the communication apparatus 500 is configured to implement the functions of the terminal in the method embodiment shown in FIG. 3, the transceiver unit 520 is configured to receive configuration information from a network device, where the configuration information indicates SSB resources in M secondary cells, and M is a positive integer. The transceiver unit 520 is further configured to receive indication information from the network device, where the indication information indicates to receive the first SSB in a first secondary cell, and the first secondary cell is one of the M secondary cells. The transceiver unit 520 is further configured to receive the first SSB from the network device on the SSB resource in the first secondary cell.

In a possible implementation, the transceiver unit 520 is further configured to send a signal to the network device, where the signal is used to request the network device to send the SSB in N secondary cells, the N secondary cells include the first secondary cell, and N is a positive integer.

In a possible implementation, the indication information further indicates to receive a second SSB in a second secondary cell, where the second secondary cell is one of the M secondary cells, and the second secondary cell is different from the first secondary cell. The transceiver unit 520 is further configured to receive the second SSB from the network device on the SSB resource in the second secondary cell.

When the communication apparatus 500 is configured to implement the functions of the terminal in the method embodiment shown in FIG. 4, the transceiver unit 520 is configured to send a first signal to the network device, where the first signal is used to request the network device to send the first SSB in the first secondary cell. The transceiver unit 520 is further configured to receive the first SSB from the network device in the first secondary cell.

In a possible implementation, the first signal is further used to request the network device to send a second SSB in a second secondary cell, where the second secondary cell is one of the N secondary cells, and the second secondary cell is different from the first secondary cell. The transceiver unit 520 is further configured to receive, in the second secondary cell, the second SSB from the network device.

When the communication apparatus 500 is configured to implement the function of the network device in the method embodiment shown in FIG. 3, the transceiver unit 520 is configured to send configuration information to a terminal, where the configuration information indicates synchronization signal block SSB resources in M secondary cells, and M is a positive integer. The transceiver unit 520 is further configured to send indication information to the terminal, where the indication information indicates to receive the first SSB in the first secondary cell, and the first secondary cell is one of the M secondary cells. The transceiver unit 520 is further configured to send the first SSB to the terminal on the SSB resource in the first secondary cell.

In a possible implementation, the transceiver unit 520 is further configured to receive a signal from the terminal, where the signal is used to request the network device to send an SSB in N secondary cells, the N secondary cells include the first secondary cell, and N is a positive integer.

In a possible implementation, the indication information further indicates to receive a second SSB in a second secondary cell, where the second secondary cell is one of the M secondary cells, and the second secondary cell is different from the first secondary cell. The transceiver unit 520 is further configured to send the second SSB to the terminal on the SSB resource in the second secondary cell.

When the communication apparatus 500 is configured to implement the function of the network device in the method embodiment shown in FIG. 4, the transceiver unit 520 is configured to receive a first signal from a terminal, where the first signal is used to request the network device to send the first SSB in the first secondary cell. The transceiver unit 520 is further configured to send the first SSB to the terminal in the first secondary cell.

In a possible implementation, the first signal is further used to request the network device to send a second SSB in a second secondary cell, where the second secondary cell is one of the N secondary cells, and the second secondary cell is different from the first secondary cell. The transceiver unit 520 is further configured to send the second SSB to the terminal in the second secondary cell.

For more detailed descriptions of the processing unit 510 and the transceiver unit 520, refer to related descriptions in the method embodiment shown in FIG. 3 or FIG. 4.

As shown in FIG. 6, a communication apparatus 600 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to store instructions executed by the processor 610, input data needed by the processor 610 to run the instructions, or data generated after the processor 610 runs the instructions. Sometimes, the interface circuit 620 may also be understood as a part of the processor 610. In this case, the communication apparatus 600 includes the processor 610.

When the communication apparatus 600 is configured to implement the method shown in FIG. 3 or FIG. 4, the processor 610 is configured to implement a function of the processing unit 510, and the interface circuit 620 is configured to implement a function of the transceiver unit 520.

When the communication apparatus is a chip used in a terminal, the chip in the terminal implements a function of the terminal in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by the module.

When the communication apparatus is a chip used in a base station, the chip in the base station implements a function of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by the module.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/Or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

In addition, to clearly describe the technical solutions in embodiments of this application, the terms such as "first" and "second" are used in embodiments of this application to distinguish between same items or similar items that have basically same network elements or purposes. A person skilled in the art may understand that the terms such as "first" and "second" do not limit a quantity or an execution sequence, and the terms such as "first" and "second" do not indicate a definite difference.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A method for transmitting an SSB in a secondary cell, comprising:
receiving configuration information from a network device, wherein the configuration information indicates synchronization signal block SSB resources in M secondary cells, and M is a positive integer;
receiving indication information from the network device, wherein the indication information indicates to receive a first SSB in a first secondary cell, and the first secondary cell is one of the M secondary cells; and
receiving, on an SSB resource in the first secondary cell, the first SSB from the network device.

2. The method according to claim 1, wherein the indication information comprises a cell index of the first secondary cell.

3. The method according to claim 1, wherein the indication information is a bitmap, and one bit in the bitmap corresponds to the first secondary cell.

4. The method according to any one of claims 1 to 3, wherein the method further comprises:
sending a signal to the network device, wherein the signal is used to request the network device to send an SSB in N secondary cells, the N secondary cells comprise the first secondary cell, and N is a positive integer.

5. The method according to any one of claims 1 to 4, wherein the method further comprises:
the indication information further indicates to receive a second SSB in a second secondary cell, wherein the second secondary cell is one of the M secondary cells, and the second secondary cell is different from the first secondary cell; and
receiving, on an SSB resource in the second secondary cell, the second SSB from the network device.

6. A method for transmitting an SSB in a secondary cell, comprising:
sending configuration information to a terminal, wherein the configuration information indicates synchronization signal block SSB resources in M secondary cells, and M is a positive integer;
sending indication information to the terminal, wherein the indication information indicates to receive a first SSB in a first secondary cell, and the first secondary cell is one of the M secondary cells; and
sending the first SSB to the terminal on an SSB resource in the first secondary cell.

7. The method according to claim 6, wherein the indication information comprises a cell index of the first secondary cell.

8. The method according to claim 6, wherein the indication information is a bitmap, and one bit in the bitmap corresponds to the first secondary cell.

9. The method according to any one of claims 6 to 8, wherein the method further comprises:
receiving a signal from the terminal, wherein the signal is used to request the network device to send an SSB in N secondary cells, the N secondary cells comprise the first secondary cell, and N is a positive integer.

10. The method according to any one of claims 6 to 9, wherein the method further comprises:
the indication information further indicates to receive a second SSB in a second secondary cell, wherein the second secondary cell is one of the M secondary cells, and the second secondary cell is different from the first secondary cell; and
sending the second SSB to the terminal on an SSB resource in the second secondary cell.

11. A communication apparatus, comprising a unit or a module configured to implement the method according to any one of claims 1 to 10.

12. A communication apparatus, wherein the communication apparatus comprises at least one processor, and the at least one processor is configured to perform the method according to any one of claims 1 to 10.

13. A communication system, wherein the communication system comprises a terminal device and a network device;
the terminal device is configured to perform the method according to any one of claims 1 to 5; and
the network device is configured to perform the method according to any one of claims 6 to 10.

14. A computer-readable storage medium, wherein the computer-readable storage medium stores computer instructions, and when the computer instructions are executed, the computer is enabled to perform the method according to any one of claims 1 to 10.

15. A computer program product, wherein the computer program product comprises computer program code, and when the computer program code is run by a computer, the computer is enabled to perform the method according to any one of claims 1 to 10.
